# EUROPEAN PATENT SPECIFICATION

(11) **EP 2 609 807 B1**
(45) Date of publication and mention of the grant of the patent: **19.11.2014**
(21) Application number: 12008403.3
(22) Date of filing: 18.12.2012
(51) Int. Cl.: A01L 7/10

(54) **Horseshoe nail for nailing a horseshoe on a horse's toe**
Hufeisennagel zum Nageln eines Hufeisens an den Fußnagel eines Pferds
Clou de fer à cheval pour clouer un fer à cheval sur un orteil du cheval

(30) Priority: 29.12.2011 NL 1039274
(43) Date of publication of application: 03.07.2013
(73) Proprietor: Kerckhaert, besloten vennootschap, 4581 AE Vogelwaarde (NL)
(72) Inventor: Kerckhaert, Rudolf Karel Marie, 9290 Sint Niklaas (BE)
(74) Representative: Donné, Eddy

(56) References cited:
- WO-A1-97/00606
- DE-C- 44 297
- FR-A- 378 732
- GB-A- 740 626
- GB-A- 191 116 261
- GB-A- 191 516 496
- SE-C1- 1 565

## Description

The present invention relates to a horseshoe nail for nailing a horseshoe to a hoof.

Of course horseshoe nails for nailing a horseshoe to a hoof of a horse are known, but despite their long existence they are nonetheless still open to improvement.

More specifically a farrier can shoe an average of around six horses in one working day.

This means that such a farrier must affix twenty four horseshoes to the hooves of these horses in one day.

Around eight horseshoe nails are normally needed for each horseshoe, which yields a total of 192 horseshoe nails that a farrier consumes daily.

It is important to know here that such a horseshoe nail for nailing a horseshoe cannot be affixed into the hoof in any arbitrary fashion.

As is known, a horseshoe nail contains a head with a head face at one end of the horseshoe nail, and this head runs into a point at the other end of the horseshoe nail via a shank.

The head is often formed by two truncated pyramids that are placed together at their base or more generally by a section that flares from the head face of the horseshoe nail in the direction of the point, followed by a tapered section that connects to the shank.

Less well known is the fact that the point is provided with a 'bevel'.

Such a bevel is generally constructed as a slope or slanting side on one side of the point of the horseshoe nail, such that this point presents a certain asymmetry with respect to the centre line of the horseshoe nail.

The bevel is intended to guide the horseshoe nail during nailing, whereby more specifically the asymmetry of the point of the horseshoe nail is intended to guide the horseshoe nail towards the outside of the hoof wall when being driving into the hoof.

Consequently when nailing it is very important to know the orientation of the bevel.

Indeed, during nailing, the horseshoe nails must be placed in the rectangular nail holes concerned, that are provided in the groove of the horseshoe to be nailed, such that the bevel or the slope is oriented towards the innermost edge of the horseshoe.

If the farrier makes a mistake when fitting the horseshoe nail and the horseshoe nail is placed in the nail hole the wrong way around, thus with the bevel towards the outermost edge of the horseshoe, then when penetrating into the hoof the horseshoe nail will deviate or be guided towards the inside of the hoof, which can have serious consequences, such as the horse becoming lame for example, such that veterinary intervention may be required.

This must be avoided at all costs.

In view of the large number of horseshoe nails that a farrier has to correctly apply each day, the risk of a mistake occurring is reasonably high.

According to the state of the art, to this end the horseshoe nail is provided with one or more identifying marks from which the orientation of the bevel can be deduced, for example by stamping or engraving such a mark in a side of the horseshoe nail or similar, as described in WO 97/00606.

Such a mark is often a logo or brand name or similar.

Horseshoe nails as described above are known from DE 44 267 and SE 1565, and are provided with ribs on the tapered section of the head that connects to the shank that are intended to be able to nail the horseshoe nail more firmly in a nail hole of a horseshoe.

Although these ribs are not intended for deducing the orientation of the bevel, they could indeed be used for this purpose.

However, a disadvantage of these known types of horseshoe nails is that the mark or ribs applied cannot be easily seen from the head.

Moreover it is the case that when nailing, the farrier usually takes the horseshoe nail to be nailed between his fingers, such that the fingers cover the mark or the ribs.

Also as a result of this, the placing of a horseshoe nail in the groove of a horseshoe requires a lot of attention from the farrier, whereby a lapse of attention, for example as a result of routinely nailing horseshoes onto hooves, can easily lead to the incorrect orientation of the horseshoe nail in the hole concerned of the groove.

The purpose of the invention is to provide a solution to one or more of the aforementioned disadvantages and any other disadvantages.

More specifically it is an objective of the invention to provide a horseshoe nail that enables a farrier to correctly orient the horseshoe nail in the groove of the horseshoe without problems.

To this end the invention concerns a horseshoe nail for nailing a horseshoe to a hoof, whereby the horseshoe nail comprises a head with a head face at one end of the horseshoe nail (1) that leads to a point at the other end of the horseshoe nail via a shank, whereby the point is provided with a bevel that has a certain orientation and which is intended to direct the horseshoe nail during nailing, whereby the head of the horseshoe nail comprises a section that flares from the head face of the horseshoe nail in the direction of the point followed by a tapered section that connects to the shank, and whereby the horseshoe nail is provided with one or more marks from which the orientation of the bevel can be deduced, and whereby at least one mark is provided on the section of the head that flares from the head face and this at least one mark is such that the orientation of the bevel can be deduced from it, both by observing the head of the horseshoe nail, and by observing on a side of the horseshoe nail.

A big advantage of such a horseshoe nail according to the invention is of course that when nailing a horseshoe to a hoof a farrier can observe the orientation of the bevel more easily, and that the risk of the farrier making mistakes is thus substantially reduced.

Another advantage of a horseshoe nail according to the invention is that the mark or marks for the correct orientation of the horseshoe nail are still visible when the head of such a horseshoe nail is held between the fingers.

According to a preferred embodiment of a horseshoe nail according to the invention, the horseshoe nail is provided with a mark in the form of a notch made in a head face of the horseshoe nail, whereby this notch extends with a certain depth D up to a side of the horseshoe nail.

Such an embodiment of a horseshoe nail according to the invention is very practical to use and can also be easily manufactured, certainly with the modern production machines that are used today.

Moreover, according to the invention a horseshoe nail with such a notch is completely within the contours of the known horseshoe nails, such that there are no substantial perceptible changes during use.

With the intention of better showing the characteristics of the invention, a preferred embodiment of a horseshoe nail according to the invention is described hereinafter by way of an example, without any limiting nature, with reference to the accompanying drawings, wherein:
figure 1 shows a side view of the smallest width of a horseshoe nail according to the invention;
figure 2 shows a side view according to arrow F2 on the largest width of the horseshoe nail of figure 1;
figure 3 shows a top view according to arrow F3 of the horseshoe nail of figure 1;
figure 4 shows the point of the horseshoe nail of figure 1 on a larger scale indicated by F4;
figure 5 shows a perspective view of the head of the horseshoe nail of figure 1 indicated by F5;
figure 6 shows a bottom view of a horseshoe that is nailed in with horseshoe nails according to the invention;
figure 7 shows a cross-section according to the line VII-VII of figure 6.

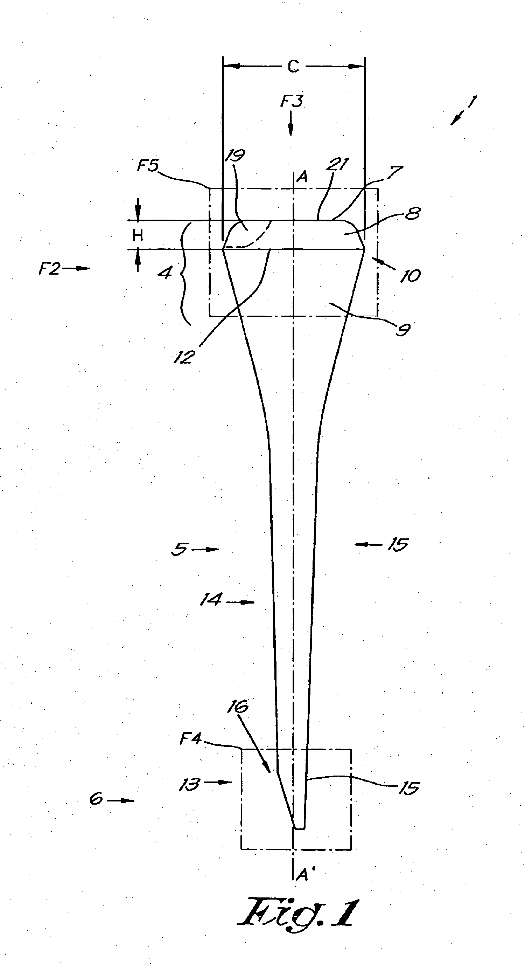

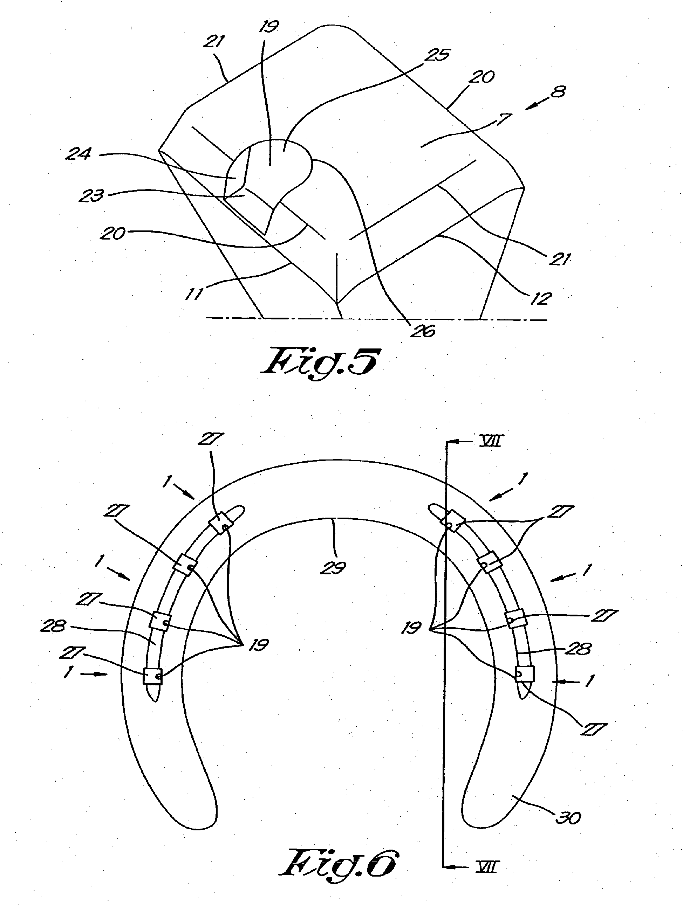

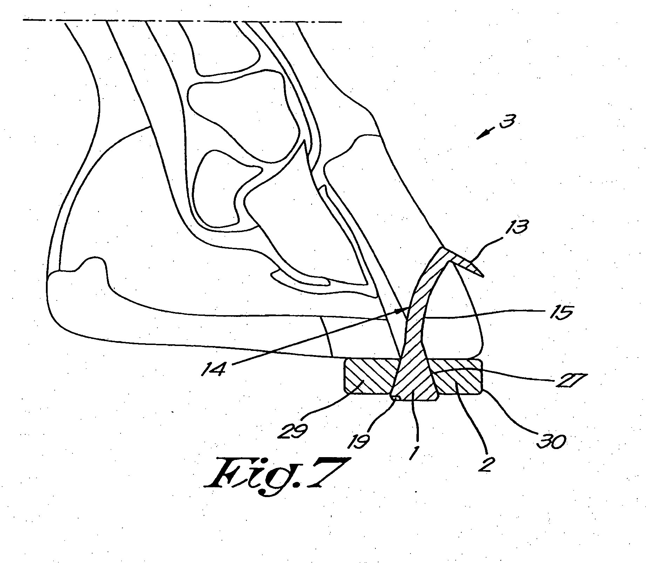

The horseshoe nail 1 according to the invention shown in figures 1 to 5 is intended for nailing a horseshoe 2, an example of which is shown in figure 6, to a hoof 3 of a horse, as shown in figure 7.

As is known, horseshoe nails 1 for shoeing a horse comprise a head 4 that leads to a point 6 via a shank 5.

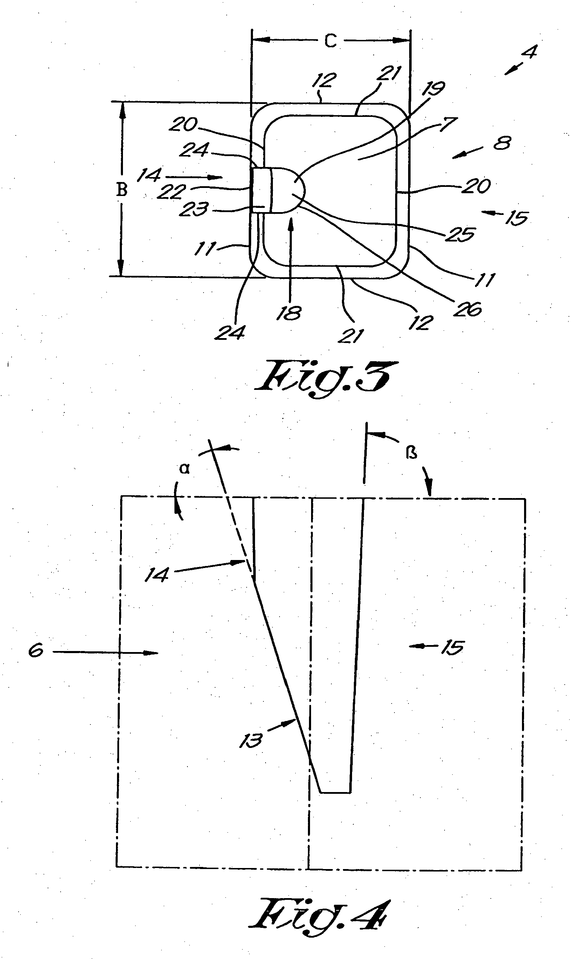

As can be clearly seen in figures 3 and 5, the horseshoe nail 1 according to the invention has a rectangular, practically square, cross-section over a substantial part of its length L.

Moreover, the head 4 of the horseshoe nail 1 has a head face 7 that is also rectangular and practically square, and which forms the top surface of a truncated pyramid 8 with a height H that forms a first section of the head 4 that flares from the head face 7 in the direction of the point 6 of the horseshoe nail 1.

Indeed, in this embodiment the entire head 4 can approximately be considered as a double truncated pyramid, subject to some rounding left out of consideration, whereby the aforementioned truncated pyramid 8 and a truncated pyramid 9 have a congruent rectangular base 10, whereby they adjoin one another and whereby the truncated pyramid 9 tapers from the base in the direction of the point 6 and thereby connects to the shank 5.

In the embodiment shown this rectangular base 10 has two opposite long side edges 11 corresponding to the largest width B of the head 4 and two opposite short side edges 12 corresponding to the smallest width C of the head 4.

Of course, in practice many other configurations according to the invention are possible and the forms described must only be considered as a possible guideline, whereby roundings or flowing forms and similar can be applied.

Moreover, the point 6 of the horseshoe nail 1 is provided with a bevel 13 that has a certain orientation and which is intended to direct the horseshoe nail 1 during nailing.

This bevel 13 forms a slope 13 to the point 6 of the horseshoe nail 1, whereby this point of the horseshoe nail 1 presents a certain asymmetry with respect to the centre line AA' of the horseshoe nail 1, as can clearly be seen in figure 1, which shows a side view of the smallest width C of the horseshoe nail 1.

In this case the slope 13 is a flat slope 13 that forms a surface 13 that extends parallel to the long side edges 11 of the aforementioned base 10.

This results in a point 6 that is asymmetric with respect to the centre line AA' of the horseshoe nail 1, as shown in more detail in figure 4, whereby the incline α of the point 6 with respect to the base 10 or head face 7 on the side 14 of the horseshoe nail 1 with bevel 13 is less than the incline β of the point 6 with respect to the base 10 or head face 7 at the side 15 of the horseshoe nail 1 opposite the side 14 with the bevel 13.

In this way when nailing the horseshoe nail 1 into a hoof 3 the point 6 of the horseshoe nail 1 tends to follow a bent curve that bends away from the side 14 with bevel 13 and towards the side 15 opposite the side 14 with bevel 13, whereby after nailing the horseshoe nail 1 into a hoof 3, the side 14 with bevel 13 forms a convex side 14 of the horseshoe nail 1, while the side 15 opposite the side 14 with bevel 13 after nailing the horseshoe nail 1 into a hoof 3 forms a concave side 14 of the horseshoe nail 1, which is shown in figure 7 by way of an example.

In brief the bending of the horseshoe nail 1 under the influence of the bevel 13 occurs in a plane transverse to the long side edges 11 and in a direction away from the side 14 with bevel 13, which immediately indicates the importance of a correct orientation of the bevel 13.

At the transition from the point 6 to the shank 5 the slope 13 is provided with a slight rounding 16.

According to the invention, however, the use of other forms is not excluded whereby, the bevel 13 for example is not formed by a flat slope 13, but is provided with more roundings and similar.

However, according to the invention in normal circumstances it is the intention to construct the bevel 13 symmetrically (and indeed also the other parts of the horseshoe nail 1) with respect to a plane of symmetry transverse to the long side edges 11 through the centre line AA', so that a bending of the horseshoe nail 1 will also take place in this plane, and the direction of the curve of the horseshoe nail 1 during nailing can thus be set through a correct orientation of the side edges 11 of the horseshoe nail 1.

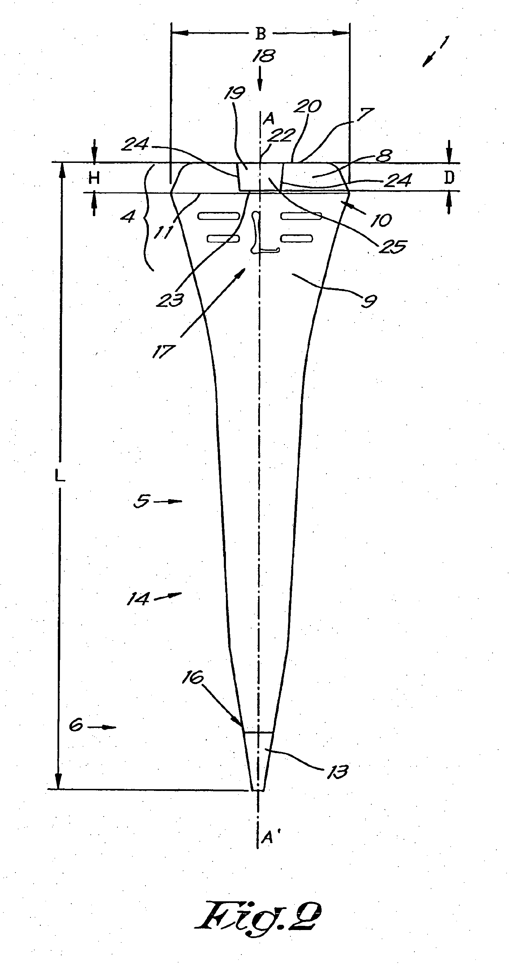

This symmetry of the horseshoe nail 1 with respect to the aforementioned plane of symmetry can be clearly deduced from figure 2, which shows a side view on the largest width B of the horseshoe nail 1.

In order to recognise the side 14 of the horseshoe nail with bevel 13, with known horseshoe nails 1 one or more marks 17 are made on the side 14 concerned of the horseshoe nail 1, from which the orientation of the bevel 13 can of course be deduced.

Figure 2 shows such usual marks 17 on the side 14, and this on a horseshoe nail 1 according to the invention, with the aim of showing that it is not excluded according to the invention to provide such a mark 17 as an additional mark 17.

As already explained in the introduction, with known horseshoe nails when the farrier takes the horseshoe nail between his fingers, the mark 17 is no longer visible and mistakes can thus easily be made regarding the correct orientation of the horseshoe nail.

However, with a horseshoe nail 1 according to the invention it is the case that at least one mark 18 is provided so that the orientation of the bevel 13 can be deduced from it by observing the head 4, or more precisely the head face 7 of the horseshoe 1, and by observing on a side 14 of the horseshoe nail 1.

With such a horseshoe nail according to the invention the farrier can always verify which side of the horseshoe nail 1 has the bevel 13, even when the horseshoe nail is held between his fingers, as is often the case while nailing.

According to a preferred embodiment of a horseshoe nail 1 according to the invention, the horseshoe nail 1 is provided with a mark 18 in the form of a notch 19 in the pyramid 8 that flares from the head face 7, in particular in the form of a notch 19 in the head face 7 of the horseshoe nail 1, which is indeed the case in the embodiment discussed here.

The notch 18 in the head face 7 has a certain depth D and extends up to a side 14 of the horseshoe nail 1.

In the example shown in the drawings, the height H of the truncated pyramid 8 corresponds or practically corresponds to the depth D of the notch 19, thus notches 19 with a greater depth D or lesser depth D are not excluded according to the invention.

The head face 7 in the example shown is rectangular and practically square, and has four side edges, more specifically two long opposite side edges 20, corresponding to the long side edges 11 on the base 10 of the double truncated pyramid, as well as two short opposite side edges 21, corresponding to the short side edges 12 on the base 10 of the double truncated pyramid.

A mark 18 from which the orientation of the bevel 13 can be deduced, in this case in the form of a notch 19, is made in the middle 22 of one of these side edges 20.

More specifically, in the embodiment shown the mark 18 from which the orientation of the bevel 13 can be deduced is made in the head face 7 on the side 14 of the bevel 13, thus in the middle of the side edge 20 on the side 14 of the horseshoe nail 1 with bevel 13.

This is of course a very simple way to indicate the side 14 of the horseshoe nail 1 with bevel 13, whereby because of the fact that the notch 19 extends by a certain length over the head face 7, the mark 18 can be seen from above, and whereby because of the fact that the notch 19 is made with a depth D up to the side edges 20 and 11 on the side 14 with bevel 13, the same mark 18 can also be seen from the side 14 of the horseshoe nail 1.

In the example shown, the notch 19 is demarcated by a flat, more or less rectangular base 23 that is parallel to the head face 7 of the horseshoe nail 1, by two upright side walls 24 transverse to the head face 7 of the horseshoe nail 1 and by a back wall 25 that connects to both side walls 24 and which extends between the base 23 and the top surface 7.

Hereby the base 23 and the upright sidewalls 24 extend up to the side 14 of the horseshoe nail 1 with bevel 13.

Moreover, between the head face 7 of the horseshoe nail 1 and the back wall 25 of the notch 19 there is an edge 26, which in this case is at least partly circular.

Of course, a horseshoe nail 1 according to the invention can be provided with a mark 18 in many different ways, which can be seen from both the top surface 7 and from a side of the horseshoe nail 1.

Moreover, such a mark 18 can be affixed in other places on a horseshoe nail 1 according to the invention, for as long as a meaning can be attributed to the mark 18 relating to the orientation of the bevel 13.

Moreover, according to the invention it is not excluded applying a number of marks 18, for example a number of marks 18 that are each separately readable from both the top surface and from a side.

Instead of making a mark 18 in the form of a notch 19, alternatively a mark 18 can also be provided in the form of an embossment on the pyramid 8 that flares from the head face 7 for example, on a head face 7 or a side of this pyramid.

Such an embossment can for example be affixed to the head face 7 and extend to the side 14 of the horseshoe nail 1 with bevel 13, such that the same effect is obtained so that the mark 18 can be seen from above, and from a side of the horseshoe nail 1.

Figure 6 also illustrates how a multitude of horseshoe nails 1 can easily be oriented correctly in nail holes 27 in a horseshoe 2 provided in a groove 28 of the horseshoe 2.

It is sufficient here to introduce the horseshoe nails 1 in the square or rectangular nail holes 27 concerned with the notch 19 on the side of the horseshoe nail with bevel 13 oriented towards the innermost edge 29 of the horseshoe 2.

In such a case, when nailing the horseshoe nail 1 into a hoof 3 of a horse, the horseshoe nail 1 will bend in the direction of the outermost edge 30 of the horseshoe 2, so that the horseshoe nail 1 can correctly exit from the hoof 3 in order to be clinched, as shown in the cross-section of figure 7.

The present invention is by no means limited to the embodiment of a horseshoe nail 1 according to the invention, described as an example and shown in the drawings, but a horseshoe nail 1 according to the invention can be realised in all kinds of variants and in different ways, without departing from the scope of the invention as defined by the claims.

## Claims

1. Horseshoe nail (1) for nailing a horseshoe (2) to a hoof (3), whereby the horseshoe nail (1) comprises a head (4) with a head face (7) at one end of the horseshoe nail (1) that leads to a point (6) at the other end of the horseshoe nail (1) via a shank (5), whereby the point (6) is provided with a bevel (13) that has a certain orientation and which is intended to guide the horseshoe nail (1) during nailing, whereby the head (4) of the horseshoe nail (1) comprises a section (8) that flares from the head face of the horseshoe nail (1) in the direction of the point (6) followed by a tapered section (9) that connects to the shank (5), and whereby the horseshoe nail (1) is provided with one or more marks (18) from which the orientation of the bevel (13) can be deduced, **characterised in that** at least one mark (18) is provided on the section (8) of the head (4) that flares from the head face, and that this at least one mark (18) is such that the orientation of the bevel (13) can be deduced from it, both by observing on a top surface (7) of the head (4) of the horseshoe nail (1), and by observing on a side (14) of the horseshoe nail (1).

2. Horseshoe nail (1) according to claim 1, **characterised in that** the horseshoe nail (1) is provided with a mark (18) in the form of a notch (19) in a head face (7) or side (14) of the horseshoe nail (1).

3. Horseshoe nail (1) according to claim 2, **characterised in that** the notch (19) is made in the head face (7) and extends with a certain depth (D) to a side (14) of the horseshoe nail (1).

4. Horseshoe nail (1) according to any one of the previous claims, **characterised in that** the horseshoe nail (1) has a square or rectangular transverse cross-section.

5. Horseshoe nail (1) according to claim 4, **characterised in that** the head face (7) of the head (4) of the horseshoe nail (1) is square or rectangular and forms the top surface (7) of a truncated pyramid (8) with a height (H) that forms the aforementioned flared section (8) of the head (4) of the horseshoe nail (1).

6. Horseshoe nail (1) according to claims 3 and 5, **characterised in that** the height (H) of the truncated pyramid (8) corresponds to the depth (D) of the notch (19).

7. Horseshoe nail (1) according to claim 2, 3 or 6, **characterised in that** the notch (19) is demarcated by:
- a flat base (23) that is parallel to the head face (7) of the horseshoe nail (1);
- two upright sidewalls (24) transverse to the head face (7) of the horseshoe nail (1); and,
- a back wall (25) that connects to both side walls (24) and which extends between the base (23) and the top surface (7);
whereby the base (23) and upright side walls (24) extend to a side (14) of the horseshoe nail (1).

8. Horseshoe nail (1) according to claim 7, **characterised in that** an edge (26) between the head face (7) of the horseshoe nail (1) and the back wall (25) of the notch (19) is at least partially circular.

9. Horseshoe nail (1) according to any one of the previous claims, **characterised in that** the horseshoe nail (1) is provided with a mark (18) in the form of an embossment on a head face (7) or a side (14) of the horseshoe nail (1).

10. Horseshoe nail (1) according to claim 9, **characterised in that** the embossment is made on the head face (7) and extends to a side (14) of the horseshoe nail (1).

11. Horseshoe nail (1) according to any one of the previous claims, **characterised in that** the head face (7) is square or rectangular and has four side edges (20,21), whereby a mark (18) from which the orientation of the bevel (13) can be deduced is made in the middle (22) of one of these side edges (20).

12. Horseshoe nail (1) according to any one of the previous claims, **characterised in that** the mark or marks (18) from which the orientation of the bevel (13) can be deduced is or are made in the head face (7) on the side (14) of the horseshoe nail (1) with bevel (13).

13. Horseshoe nail (1) according to any one of the previous claims, **characterised in that** the bevel (13) of the horseshoe nail (13) forms a sloping section at the point (6) of the horseshoe nail (1), such that this point (6) of the horseshoe nail (1) presents a certain asymmetry with respect to the centreline (AA') of the horseshoe nail (1).

14. Horseshoe nail (1) according to claim 13, **characterised in that** the sloping section (13) is a flat slope (13) that forms a plane (13) that extends parallel to a pair of side edges (20) of the head face (7).

15. Horseshoe nail (1) according to any one of the previous claims, **characterised in that** the horseshoe nail (1) has a plane of symmetry that extends through the centreline (AA') and transverse to a side edge (20) of the horseshoe nail (1).

## Patentansprüche

1. Hufnagel (1) zum Aufnageln eines Hufeisens (2) auf einen Huf (3), wobei der Hufnagel (1) an einem Ende des Hufnagels (1) einen Kopf (4) mit einer Kopffläche (7) umfasst, der mittels eines Schafts (5) in eine Spitze (6) am anderen Ende des Hufnagels (1) übergeht, wobei die Spitze (6) mit einer Abschrägung (13) versehen ist, die eine bestimmte Orientierung aufweist und die zum Führen des Hufnagels (1) während des Aufnagelns bestimmt ist, wobei der Kopf (4) des Hufnagels (1) einen Teil (8) umfasst, der sich ab der Kopffläche des Hufnagels (1) in Richtung der Spitze (6) aufweitet, gefolgt von einem sich verjüngenden Teil (9), der an den Schaft (5) anschließt, und wobei der Hufnagel (1) mit einer oder mehreren Markierungen (18) versehen ist, woraus die Orientierung der Abschrägung (13) abgeleitet werden kann, **dadurch gekennzeichnet, dass** mindestens eine Markierung (18) auf dem sich ab der Kopffläche aufweitenden Teil (8) des Kopfs (4) vorgesehen ist und dass diese mindestens eine Markierung (18) derart ist, dass daraus die Orientierung der Abschrägung (13) sowohl durch Wahrnehmung auf einer Oberseite (7) des Kopfs (4) des Hufnagels (1) als auch durch Wahrnehmung an einer Seite (14) des Hufnagels (1) abgeleitet werden kann.

2. Hufnagel (1) nach Anspruch 1, **dadurch gekennzeichnet, dass** der Hufnagel (1) mit einer Markierung (18) in Form einer Kerbe (19) in einer Kopffläche (7) oder Seite (14) des Hufnagels (1) versehen ist.

3. Hufnagel (1) nach Anspruch 2, **dadurch gekennzeichnet, dass** die Kerbe (19) in der Kopffläche (7) angebracht ist und sich mit einer gewissen Tiefe (D) bis zu einer Seite (14) des Hufnagels (1) erstreckt.

4. Hufnagel (1) nach einem der vorgenannten Ansprüche, **dadurch gekennzeichnet, dass** der Hufnagel (1) einen quadratischen oder rechteckigen Querschnitt aufweist.

5. Hufnagel (1) nach Anspruch 4, **dadurch gekennzeichnet, dass** die Kopffläche (7) des Kopfs (4) des Hufnagels (1) quadratisch oder rechteckig ist und die Oberseite (7) eines Pyramidenstumpfs (8) mit einer Höhe (H) bildet, der den vorgenannten aufgeweiteten Teil (8) des Kopfs (4) des Hufnagels (1) bildet.

6. Hufnagel (1) nach Ansprüchen 3 und 5, **dadurch gekennzeichnet, dass** die Höhe (H) des Pyramidenstumpfs (8) mit der Tiefe (D) der Kerbe (19) übereinstimmt.

7. Hufnagel (1) nach Anspruch 2, 3 oder 6, **dadurch gekennzeichnet, dass** die Kerbe (19) definiert ist durch:
- einen flachen Boden (23), der parallel zur Kopffläche (7) des Hufnagels (1) ist;
- zwei aufrechtstehende Seitenwände (24) quer zur Kopffläche (7) des Hufnagels (1); und
- eine Rückwand (25), die an die beiden Seitenwände (24) anschließt und die sich zwischen dem Boden (23) und der Oberseite (7) erstreckt;
wobei der Boden (23) und die aufrechtstehenden Seitenwände (24) sich bis zu einer Seite (14) des Hufnagels (1) erstrecken.

8. Hufnagel (1) nach Anspruch 7, **dadurch gekennzeichnet, dass** ein Rand (26) zwischen der Kopffläche (7) des Hufnagels (1) und der Rückwand (25) der Kerbe (19) mindestens teilweise kreisförmig ist.

9. Hufnagel (1) nach einem der vorgenannten Ansprüche, **dadurch gekennzeichnet, dass** der Hufnagel (1) mit einer Markierung (18) in Form einer Erhebung an einer Kopffläche (7) oder einer Seite (14) des Hufnagels (1) versehen ist.

10. Hufnagel (1) nach Anspruch 9, **dadurch gekennzeichnet, dass** die Erhebung auf der Kopffläche (7) angebracht ist und sich bis zu einer Seite (14) des Hufnagels (1) erstreckt.

11. Hufnagel (1) nach einem der vorgenannten Ansprüche, **dadurch gekennzeichnet, dass** die Kopffläche (7) quadratisch oder rechteckig ist und vier Seitenkanten (20,21) aufweist, wobei eine Markierung (18), aus der die Orientierung der Abschrägung (13) abgeleitet werden kann, in der Mitte (22) einer dieser Seitenkanten (20) angebracht ist.

12. Hufnagel (1) nach einem der vorgenannten Ansprüche, **dadurch gekennzeichnet, dass** die Markierung oder Markierungen (18), woraus die Orientierung der Abschrägung (13) abgeleitet werden kann, in der Kopffläche (7) an der mit der Abschrägung (13) versehenen Seite (14) des Hufnagels (1) angebracht ist oder sind.

13. Hufnagel (1) nach einem der vorgenannten Ansprüche, **dadurch gekennzeichnet, dass** die Abschrägung (13) des Hufnagels (13) einen abgeschrägten Teil an der Spitze (6) des Hufnagels (1) bildet, sodass diese Spitze (6) des Hufnagels (1) eine gewisse Asymmetrie in Hinblick auf die Mittellinie (AA') des Hufnagels (1) aufweist.

14. Hufnagel (1) nach Anspruch 13, **dadurch gekennzeichnet, dass** der abgeschrägte Teil (13) eine flache Abschrägung (13) ist, welche eine Flache (13) bildet, die sich parallel zu einem Paar Seitenkanten (20) der Kopffläche (7) erstreckt.

15. Hufnagel (1) nach einem der vorgenannten Ansprüche, **dadurch gekennzeichnet, dass** der Hufnagel (1) eine Symmetrieebene aufweist, die sich durch die Mittellinie (AA') und quer zu einer Seitenkante (20) des Hufnagels (1) erstreckt.

## Revendications

1. Clou pour fers à cheval (1) pour clouer un fer à cheval (2) à un sabot (3), le clou pour fers à cheval (1) comprenant une tête (4) possédant une face de tête (7) à une extrémité du clou pour fers à cheval (1) qui mène à une pointe (6) à l'autre extrémité du clou pour fers à cheval (1) via une tige (5), la pointe (6) étant munie d'un chanfrein (13) qui possède une certaine orientation et qui est destiné à guider le clou pour fers à cheval (1) lors du clouage, la tête (4) du clou pour fers à cheval (1) comprenant une section (8) qui s'évase depuis la face de tête du clou pour fers à cheval (1) dans la direction de la pointe (6), suivie d'une section ionique (9) qui vient se relier à la tige (5), et le clou pour fers à cheval (1) étant muni d'un ou de plusieurs repères (18) à partir desquels l'orientation du chanfrein (13) peut être déduite, **caractérisé en ce qu'**au moins un repère (18) est prévu sur la section (8) de la tête (4) qui s'évase à partir de la face de tête, et **en ce que** ledit au moins un repère (18) est tel que l'orientation du chanfrein (13) peut en être déduite, à la fois lorsqu'on regarde dans la direction de la surface supérieure (7) de la tête (4) du clou pour fers à cheval (1) et lorsqu'on regarde dans la direction d'un côté (14) du clou pour fers à cheval (1).

2. Clou pour fers à cheval (1) selon la revendication 1, **caractérisé en ce que** le clou pour fers à cheval (1) est muni d'un repère (18) sous la forme d'une encoche (19) dans la face de tête (7) ou dans le côté (14) du clou pour fers à cheval (1).

3. Clou pour fers à cheval (1) selon la revendication 2, **caractérisé en ce que** l'encoche (19) est pratiquée dans la face de tête (7) et s'étend sur une certaine profondeur (D) jusqu'à un côté (14) du clou pour fers à cheval (1).

4. Clou pour fers à cheval (1) selon l'une quelconque des revendications précédentes, **caractérisé en ce que** le clou pour fers à cheval (1) possède une section transversale carrée ou rectangulaire.

5. Clou pour fers à cheval (1) selon la revendication 4, **caractérisé en ce que** la face de tête (7) de la tête (4) du clou pour fers à cheval (1) est carrée ou rectangulaire et forme la surface supérieure (7) d'une pyramide tronquée (8) avec une hauteur (H) qui forme la section évasée susmentionnée (8) de la tête (4) du clou pour fers à cheval (1).

6. Clou pour fers à cheval (1) selon les revendications 3 et 5, **caractérisé en ce que** la hauteur (H) de la pyramide tronquée (8) correspond à la profondeur (D) de l'encoche (19).

7. Clou pour fers à cheval (1) selon la revendication 2, 3 ou 6, **caractérisé en ce que** l'encoche (19) est délimitée par :
- une base plate (23) qui est parallèle à la face de tête (7) du clou pour fers à cheval (1) ;
- deux parois latérales dressées (24) en direction transversale par rapport à la face de tête (7) du clou pour fers à cheval (1) ; et
- une paroi dorsale (25) qui est reliée aux deux parois latérales (24) et qui s'étend entre la base (23) et la surface supérieure (7) ;
la base (23) et les parois latérales dressées (24) s'étendant en direction d'un côté 14 du clou pour fers à cheval (1).

8. Clou pour fers à cheval (1) selon la revendication 7, **caractérisé en ce qu'**un bord (26) entre la face de tête (7) du clou pour fers à cheval (1) et la paroi dorsale (25) de l'encoche (19) est au moins partiellement circulaire.

9. Clou pour fers à cheval (1) selon l'une quelconque des revendications précédentes, **caractérisé en ce que** le clou pour fers à cheval (1) est muni d'un repère (18) sous la forme d'une protubérance sur la face de tête (7) ou sur un côté (14) du clou pour fers à cheval (1).

10. Clou pour fers à cheval (1) selon la revendication 9, **caractérisé en ce que** la protubérance est réalisée sur la face de tête (7) et s'étend jusqu'à un côté (14) du clou pour fers à cheval (1).

11. Clou pour fers à cheval (1) selon l'une quelconque des revendications précédentes, **caractérisé en ce que** la face de tête (7) est carrée ou rectangulaire et possède quatre bords latéraux (20, 21), un repère (18), à partir duquel l'orientation du chanfrein (13) peut être déduite, étant réalisé au milieu (22) d'un de ces bords latéraux (20).

12. Clou pour fers à cheval (1) selon l'une quelconque des revendications précédentes, **caractérisé en ce que** le ou les repères (18) à partir duquel ou desquels l'orientation du chanfrein (13) peut être déduite, est ou sont réalisés dans la face de tête (7) sur le côté (14) du clou pour fers à cheval (1) comprenant le chanfrein (13).

13. Clou pour fers à cheval (1) selon l'une quelconque des revendications précédentes, **caractérisé en ce que** le chanfrein (13) du clou pour fers à cheval (1) forme une section inclinée à la pointe (6) du clou pour fers à cheval (1), de telle sorte que cette pointe (6) du clou pour fers à cheval (1) présente une certaine asymétrie par rapport à la ligne médiane (AA') du clou pour fers à cheval (1).

14. Clou pour fers à cheval (1) selon la revendication 13, **caractérisé en ce que** la section inclinée (13) représente une pente plate (13) qui forme un plan (13) qui s'étend parallèlement à une paire de bords latéraux (20) de la face de tête (7).

15. Clou pour fers à cheval (1) selon l'une quelconque des revendications précédentes, **caractérisé en ce que** le clou pour fers à cheval (1) possède un plan de symétrie qui s'étend en passant par la ligne médiane (AA') et en direction transversale jusqu'à un bord latéral (20) du clou pour fers à cheval (1).
